(19) Europäisches Patentamt
European Patent Office
Office européen des brevets

(11) **EP 2 829 892 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(51) Int Cl.:
*G01S 13/90* *(2006.01)*  *G01S 13/00* *(2006.01)*
*G01S 7/295* *(2006.01)*

(21) Anmeldenummer: **14175418.4**

(22) Anmeldetag: **02.07.2014**

(54) **Verfahren zur rechnergestützten Verarbeitung von SAR-Daten**

Method for the computer-assisted processing of SAR data

Procédé de traitement assisté par ordinateur de données RSO

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **08.07.2013 DE 102013213304**

(43) Veröffentlichungstag der Anmeldung:
**28.01.2015 Patentblatt 2015/05**

(73) Patentinhaber: **Deutsches Zentrum für Luft- und Raumfahrt e.V.**
**51147 Köln (DE)**

(72) Erfinder:
• **Rodriguez-Cassola, Marc**
  **80768 München (DE)**
• **Pinheiro, Muriel Aline**
  **82205 Gilching (DE)**
• **Prats-Iraola, Pau**
  **82205 Gilching (DE)**
• **Krieger, Gerhard**
  **82131 Gauting (DE)**

(74) Vertreter: **Fink Numrich**
**Patentanwälte PartmbB**
**European Patent and Trademark Attorneys**
**Wendl-Dietrich-Straße 14**
**80634 München (DE)**

(56) Entgegenhaltungen:
• KRIEGER G ET AL: "SAR signal reconstruction from non-uniform displaced phase centre sampling", GEOSCIENCE AND REMOTE SENSING SYMPOSIUM, 2004. IGARSS '04. PROCEEDINGS . 2004 IEEE INTERNATIONAL ANCHORAGE, AK, USA 20-24 SEPT. 2004, PISCATAWAY, NJ, USA,IEEE, Bd. 3, 20. September 2004 (2004-09-20), Seiten 1763-1766, XP010751954, DOI: 10.1109/IGARSS.2004.1370674 ISBN: 978-0-7803-8742-3
• TAO LAI ET AL: "Achieving HRWS Images with Space-borne Bistatic SAR with Multiple Phase Centers", GEOSCIENCE AND REMOTE SENSING SYMPOSIUM, 2008. IGARSS 2008. IEEE INTERNATIONAL, IEEE, PISCATAWAY, NJ, USA, 7. Juli 2008 (2008-07-07), Seiten V-180, XP031423190, ISBN: 978-1-4244-2807-6
• LIU Y ET AL: "Signal model and imaging algorithm for spaceborne interrupted continuous-wave synthetic aperture radar", IET RADAR SONAR NAVIGATION, THE INSTITUTION OF ENGINEERING AND TECHNOLOGY, UK, Bd. 6, Nr. 5, 1. Juni 2012 (2012-06-01), Seiten 348-358, XP006041836, ISSN: 1751-8784, DOI: 10.1049/IET-RSN.2011.0287
• YI JIANG ET AL: "Study on time domain reconstruction from non-uniform azimuth sampling in SAR signal", 2007 1ST ASIAN AND PACIFIC CONFERENCE ON SYNTHETIC APERTURE RADAR, 1. November 2007 (2007-11-01), Seiten 725-728, XP055158752, DOI: 10.1109/APSAR.2007.4418714 ISBN: 978-1-42-441188-7

EP 2 829 892 B1

- **DEREGOWSKI S M ET AL: "GEOMETRICAL OPTICS AND WAVE THEORY OF CONSTANT OFFSET SECTIONS IN LAYERED MEDIA", GEOPHYSICAL PROSPECTING, OXFORD, GB, Bd. 29, 1. Januar 1981 (1981-01-01), Seiten 374-406, XP000618120,**

- **G BOLONDI ET AL: "Offset Continuation in Theory and Practice", GEOPHYSICAL PROSPECTING, Bd. 32, 1. Januar 1984 (1984-01-01), Seiten 1045-1073, XP055158744,**

**Beschreibung**

Die Erfindung betrifft ein Verfahren zur rechnergestützten Verarbeitung von SAR-Daten.

SAR-Systeme (SAR = Synthetic Aperture Radar) ermöglichen die Fernerkundung der Erdoberfläche über die Erfassung von an der Erdoberfläche reflektierten Radarpulsen, die von dem SAR-Radarsystem ausgesendet werden, welches sich mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Planeten als der Erdoberfläche betreffen.

In SAR-Radarsystemen macht man sich die Erkenntnis zunutze, dass aufgrund der Bewegung in Azimut-Richtung die gleichen Bereiche der Erde bzw. eines Planeten in unterschiedlichen Positionen erfasst werden, wodurch eine Amplituden- und Phaseninformation und schließlich ein Radarbild der Erde erhalten werden kann. Es wird somit eine synthetische Apertur in Azimut-Richtung erzeugt.

Die Erfassung der Radarechos durch ein SAR-Radarsystem führt zu einer Datenakquisition, bei der für eine Vielzahl von Azimut-Positionen in Azimut-Richtung jeweils Tastwerte für unterschiedliche Range-Positionen in einer Range-Richtung vorliegen, wobei die Range-Richtung senkrecht zur Azimut-Richtung ist. In bestimmten Fällen kann es zu Unterbrechungen bei der Erfassung der SAR-Daten kommen, welche verschiedene Ursachen haben können. Insbesondere können die Radarechos korrumpiert sein oder der Empfang von Radarechos wurde in bestimmten Zeitintervallen absichtlich unterbrochen. Dies kann insbesondere bei sog. bistatischen SAR-Systemen der Fall sein, bei denen ein ausgesendetes Radarecho über zwei Empfänger auf unterschiedlichen Plattformen empfangen wird, welche sich mit konstanter Geschwindigkeit versetzt zueinander bewegen. Bei solchen bistatischen SAR-Systemen werden z.B. zur Synchronisation in regelmäßigen Abständen Daten zwischen Radaren der beiden Plattformen ausgetauscht. Beim Datenaustausch wird dabei der Empfang der Radarechos unterbrochen, so dass Tastwerte in der Datenakquisition fehlen. Fehlende Tastwerte in SAR-Datenakquisitionen führen zu einer Zunahme der Energie der Nebenkeulen, was die Qualität des SAR-Bilds verschlechtert und insbesondere zu sog. Ghost-Targets im SAR-Bild führen kann.

Zur Rekonstruktion von fehlenden Tastwerten in SAR-Datenakquisitionen sind verschiedene Verfahren bekannt. Einfache Interpolationsverfahren können dabei oftmals nicht verwendet werden, da die Pulswiederholfrequenz der Radarpulse oftmals nahe am Nyquist-Kriterium liegt, so dass bei fehlenden Tastwerten das Nyquist-Kriterium nicht mehr erfüllt ist. Aus dem Stand der Technik sind ferner parametrische und nicht-parametrische Ansätze zur Rekonstruktion von Tastwerten bekannt. Diese Verfahren eignen sich jedoch oftmals nicht zur Rekonstruktion von homogenen Szenen oder sie sind sehr rechenaufwändig.

Das Dokument [3] offenbart eine SAR-Signalrekonstruktion für eine ungleichmäßige Abtastung der synthetischen Apertur, die durch mehrere ungleichmäßig versetzte Phasenzentren hervorgerufen ist.

In der Druckschrift [4] wird ein Verfahren zur Rekonstruktion einer eindeutigen gleichmäßigen Abtastung von Radarechos in einem bistatischen SAR-System mit mehreren Phasenzentren beschrieben.

In dem Dokument [5] wird ein Datenrekonstruktions-Algorithmus für ein ICW-SAR-Radarsystem erläutert (ICW = Interrupted Continuous Wave).

Die Druckschrift [6] offenbart eine Rekonstruktion in der Zeitdomäne für ein ungleichmäßig abgetastetes SAR-Signal.

Aufgabe der Erfindung ist es, ein Verfahren und eine Vorrichtung zur rechnergestützten Verarbeitung von SAR-Daten zu schaffen, mit denen fehlende Tastwerte in einer Datenakquisition einfach und genau rekonstruiert werden können.

Diese Aufgabe wird durch das Verfahren gemäß Patentanspruch 1 bzw. die Vorrichtung gemäß Patentanspruch 10 gelöst. Weiterbildungen der Erfindung sind in den abhängigen Ansprüchen definiert.

Das erfindungsgemäße Verfahren dient zur rechnergestützten Verarbeitung von SAR-Daten, welche von einem SAR-Radarsystem zur Fernerkundung der Erdoberfläche stammen. Dieses SAR-Radarsystem umfasst zumindest einen Sender und zwei Empfänger. Bei der Datenerfassung bewegt sich das SAR-Radarsystem in eine Azimut-Richtung. Dabei werden bzw. wurden die Radarechos von durch den zumindest einen Sender ausgesendeten und an der Erdoberfläche reflektierten Radarpulsen durch die zwei Empfänger empfangen. Hierdurch wird für den einen der zwei Empfänger eine erste Datenakquisition erhalten, welche für eine Vielzahl von Azimut-Positionen in der Azimut-Richtung jeweils erste Tastwerte für mehrere Range-Positionen in einer zur Azimut-Richtung senkrechten Range-Richtung umfasst. Analog wird für den anderen Empfänger der zwei Empfänger eine zweite Datenakquisition erhalten, welche für eine Vielzahl von Azimut-Positionen in der Azimut-Richtung jeweils zweite Tastwerte für mehrere Range-Positionen in einer zur Azimut-Richtung senkrechten Range-Richtung umfasst. Das SAR-System ist derart ausgestaltet, dass die erste und zweite Datenakquisition zumindest teilweise das gleiche Gebiet der Erdoberfläche überdecken.

Das erfindungsgemäße Verfahren zeichnet sich dadurch aus, dass im Falle von einem oder mehreren fehlenden ersten Tastwerten der ersten Datenakquisition eine geometrische Rekonstruktion für einen jeweiligen fehlenden ersten Tastwert durchgeführt wird. Bei dieser geometrischen Rekonstruktion wird der jeweilige fehlende erste Tastwert aus vorhandenen zweiten Tastwerten mit Positionen (d.h. entsprechende Azimut- und Range-Positionen) in der zweiten Datenakquisition rekonstruiert, welche Reflexionspositionen auf der Erdoberfläche von Radarechos entsprechen, die zum fehlenden ersten Tastwert beitragen, wodurch ein dritter Tastwert erhalten wird, wobei der dritte Tastwert oder ein aus dem dritten Tastwert abgeleiteter Tastwert den fehlenden ersten Tastwert ersetzt.

Die geometrische Rekonstruktion bestimmt dabei den dritten Tastwert $d_{m,GR}$ für eine vorgegebene Azimut-Position der ersten Datenakquisition wie folgt:

$$d_{m,GR}(r_{m,0}) = \int dt_{a,s} \int dr_s \cdot d_s(r_s, t_{a,s}) \cdot \exp\left[j \cdot \frac{4\pi}{\lambda} \cdot r_s(t_{a,s})\right] \cdot$$

$$\exp\left[-j \cdot \frac{4\pi}{\lambda} \cdot r_{m,0}\right] \quad,$$

wobei $r_{m,0}$ die Range-Position des dritten Tastwerts $d_{m,GR}$ ist;

wobei $r_s$ die Range-Positionen gemäß der zweiten Datenakquisition darstellen und $d_s(r_s)$ interpolierte zweite Tastwerte der zweiten Datenakquisition für die vorgegebene Azimut-Position sind;

wobei über die Range-Positionen $r_s$ integriert wird, welche Reflexionspositionen auf der Erdoberfläche von Radarechos entsprechen, die zum fehlenden ersten Tastwert beitragen, und $t_{a,s}$ die Azimut-Positionen gemäß der zweiten Datenakquisiton sind, die durch diese Reflexionspositionen eingenommen werden (ggf. kann sich $t_{a,s}$ nur auf eine Azimut-Position beziehen, wobei in diesem Fall das Integral über $t_{a,s}$ weggelassen wird);

wobei $\lambda$ die Wellenlänge der Radarstrahlung des SAR-Radarsystems ist.

Das obige Integral, welches auch als Backprojection-Integral bezeichnet wird, kann auch in einer anderen Domäne (d.h. im Frequenzbereich) geeignet dargestellt werden.

Man macht sich in dem erfindungsgemäßen Verfahren die Erkenntnis zunutze, dass in einem SAR-Radarsystem, in dem zwei Datenakquisitionen erfasst werden, fehlende Tastwerte der einen Datenakquisition aus Tastwerten der anderen Datenakquisition bestimmt werden können. Hierfür wird eine geeignete geometrische Rekonstruktion verwendet, bei der zur Rekonstruktion eines ersten Tastwerts solche zweiten Tastwerte herangezogen werden, welche die Information von Radarechos von den gleichen Reflexionspositionen auf der Erdoberfläche wie der fehlende erste Tastwert enthalten.

Das erfindungsgemäße Verfahren kann immer dann eingesetzt werden, wenn die erste und die zweite Datenakquisition kohärent in dem Sinne sind, dass die daraus resultierenden SAR-Bilder ein gemeinsames Frequenzband des Spektrums der erfassten Szene enthalten. Insbesondere kann das erfindungsgemäße Verfahren dabei in einem SAR-Radarsystem zum Einsatz kommen, welches ein erstes monostatisches SAR-Radarsystem und ein zweites monostatisches SAR-Radarsystem umfasst, welche sich mit im Wesentlichen gleicher Geschwindigkeit in Azimut-Richtung versetzt zueinander bewegen, wobei mit einem Sender und einem Empfänger des ersten monostatischen SAR-Radarsystems die erste Datenakquisition und mit einem Sender und einem Empfänger des zweiten monostatischen SAR-Radarsystems die zweite Datenakquisition durchgeführt wird. Ein monostatisches SAR-Radarsystem zeichnet sich dabei dadurch aus, dass bei der Datenakquisition ein Sender und ein Empfänger auf der gleichen Plattform verwendet werden.

Ebenso kann das erfindungsgemäße Verfahren auch für ein bistatisches SAR-Radarsystem mit einem ersten SAR-Radarsystem auf einer Plattform und einem zweiten SAR-Radarsystem auf einer anderen Plattform eingesetzt werden, welche sich mit im Wesentlichen gleicher Geschwindigkeit in Azimut-Richtung versetzt zueinander bewegen. Dabei wird mit einem Sender und einem Empfänger des ersten SAR-Radarsystems die erste oder zweite Datenakquisition durchgeführt, wohingegen mit dem Sender des ersten Radarsystems und einem Empfänger des zweiten SAR-Radarsystems die entsprechende zweite oder erste Datenakquisition durchgeführt wird. Bistatische SAR-Radarsysteme zeichnen sich dadurch aus, dass Datenakquisitionen durch Sender und Empfänger auf unterschiedlichen Plattformen erfasst werden können.

In einer besonders bevorzugten Ausführungsform wird ferner berücksichtigt, dass bei der Datenakquisition über Empfänger an unterschiedlichen Positionen eine Verschiebung im Frequenzspektrum der entsprechenden SAR-Bilder auftreten kann. In der Druckschrift [1] wird diese Frequenzverschiebung bei unterschiedlichen Positionen entsprechender Empfänger erläutert (siehe dort insbesondere Gleichung (6)). Diese Frequenzverschiebung wird in einer besonders bevorzugten Ausführungsform des erfindungsgemäßen Verfahrens im Rahmen einer Filterung berücksichtigt. Dabei wird ein vierter Tastwert aus dem dritten Tastwert durch eine Filterung ermittelt, welche derart ausgestaltet ist, dass die spektrale Bandbreite des sich aus dem vierten Tastwert ergebenden Bildpunkts eines SAR-Bildes an der Azimut- und Range-Position des dem dritten Tastwert entsprechenden fehlenden ersten Tastwerts den überlappenden Bereich zwischen der spektralen Bandbreite für den Bildpunkt eines sich aus der ersten Datenakquisition ergebenden SAR-Bilds an der Azimut- und Range-Position des fehlenden ersten Tastwerts und der spektralen Bandbreite für den Bildpunkt eines sich aus der zweiten Datenakquisition ergebenden SAR-Bilds an der Azimut- und Range-Position des fehlenden ersten Tastwerts darstellt. Der vierte Tastwert oder ein aus dem vierten Tastwert abgeleiteter Tastwert ersetzt dabei den fehlenden ersten Tastwert.

Man macht sich in der soeben beschriebenen Variante der Erfindung die Erkenntnis zunutze, dass eine gute Rekonstruktion eines Tastwerts dadurch erreicht werden kann, dass die Spektren der beiden Datenakquisitionen in Überdeckung zueinander gebracht werden. Basierend auf dieser Erkenntnis wird dann eine entsprechende Filterung durchgeführt. In der detaillierten Beschreibung wird eine mögliche Implementierung einer solchen Filterung näher beschrieben.

Im Folgenden wird ein Beispiel einer Filterung beschrieben, wenn im erfindungsgemäßen Verfahren für eine Azimut-Position eine Vielzahl von dritten Tastwerten für unterschiedliche Range-Positionen durch geometrische Rekonstruktion von ersten Tastwerten erhalten wird. Dies ist immer dann der Fall, wenn mehrere Tastwerte für eine vorgegebene Azimut-Position fehlen. Insbesondere können dabei auch die Tastwerte für alle Range-Positionen einer vorgegebenen Azimut-Position fehlen. Die Filterung ist in diesem Fall derart ausgestaltet, dass für einen jeweiligen dritten Tastwert der entsprechenden Azimut-Position eine Faltung der dritten Tastwerte entlang der Range-Positionen mit einem von der Range-Position des jeweiligen dritten Tastwerts abhängigen Bandpassfilter als Impuls-Antwort-Funktion durchgeführt wird, wobei der Bandpassfilter eine durch die unterschiedlichen Positionen der Empfänger des SAR-Radarsystems verursachte Frequenzverschiebung in den dritten Tastwerten berücksichtigt. Der Bandpassfilter wird somit basierend auf der in der Gleichung (6) der Druckschrift [1] beschriebenen Frequenzverschiebung implementiert.

In einer weiteren Ausgestaltung des erfindungsgemäßen Verfahrens wird aus dem vierten Tastwert ein fünfter Tastwert ermittelt, indem die Charakteristika der ersten und zweiten Datenakquisition aneinander angepasst werden, wobei der fünfte Tastwert oder ein aus dem fünften Tastwert abgeleiteter Tastwert den fehlenden ersten Tastwert ersetzt. Insbesondere wird dabei der fünfte Tastwert über eine Faltung der vierten Tastwerte der Range-Positionen einer Azimut-Position mit einer von der Range-Position des fünften Tastwerts abhängigen Kalibrierungsfunktion als Impuls-Antwort-Funktion ermittelt. Die geeignete Festlegung einer Kalibrierungsfunktion hängt dabei von den Charakteristika der Datenakquisitionen ab, welche durch Unterschiede in der Radarerfassung hervorgerufen sind, wie z.B. unterschiedliche Antennen, unterschiedliche Frequenzen von Sender und Empfänger, unterschiedliche, zeitliche und thermische Antworten und andere mögliche Drifts in der Elektronik der Radars. Die Definition einer entsprechenden Kalibrierungsfunktion unter Berücksichtigung dieser unterschiedlichen Charakteristika ist dabei dem Fachmann bekannt bzw. liegt im Rahmen von fachmännischem Handeln. In der detaillierten Beschreibung wird ein Beispiel beschrieben, wie eine solche Kalibrierungsfunktion definiert sein kann.

In einer weiteren Variante des erfindungsgemäßen Verfahrens wird aus dem fünften Tastwert ein sechster Tastwert ermittelt, indem ein im fünften Tastwert erhaltener Restfehler korrigiert wird, wobei der sechste Tastwert dabei wiederum über eine Faltung der fünften Tastwerte der Range-Positionen einer Azimut-Position mit einer von der Range-Position des sechsten Tastwerts abhängigen Korrekturfunktion als Impuls-Antwort-Funktion ermittelt wird. Im Unterschied zur obigen Kalibrierungsfunktion wird die Korrekturfunktion dabei aus den Daten geschätzt. Hierfür kann die in der Druckschrift [2] verwendete Technik eingesetzt werden. Die gesamte Offenbarung dieser Druckschrift wird zum Inhalt der vorliegenden Anmeldung gemacht.

In einer weiteren, besonders bevorzugten Ausführungsform wird das Verfahren parallel auch zur Rekonstruktion von fehlenden zweiten Tastwerten eingesetzt. In diesem Fall wird das Verfahren analog unter Vertauschung der Rollen der ersten und zweiten Datenakquisition durchgeführt.

Neben dem oben beschriebenen Verfahren betrifft die Erfindung ferner eine Vorrichtung zur rechnergestützten Verarbeitung von SAR-Daten, wobei die Vorrichtung eine Rechnereinrichtung umfasst, mit der das erfindungsgemäße Verfahren bzw. eine oder mehrere bevorzugte Varianten des erfindungsgemäßen Verfahrens durchführbar sind. Mit anderen Worten umfasst die Vorrichtung eine Rechnereinrichtung, mit der entsprechende Tastwerte ermittelt werden können, welche die oben definierten ersten Tastwerte ersetzen. Die Vorrichtung kann dabei Teil des SAR-Radarsystems sein, welches die SAR-Daten erfasst. Ferner kann die Vorrichtung auch auf der Erde vorgesehen sein und z.B. in einer Bodenstation implementiert sein, in der an die Erde übermittelte SAR-Daten ausgewertet werden.

Die Erfindung betrifft ferner ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ferner betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ausführungsbeispiele der Erfindung werden nachfolgend anhand der beigefügten Figuren detailliert beschrieben.

Es zeigen:

Fig. 1                 eine schematische Darstellung, anhand der das im Rahmen der Erfindung verwendete SAR-Prinzip erläutert wird;

Fig. 2          eine schematische Darstellung der Erfassung von Datenakquisitionen, welche basierend auf dem erfindungsgemäßen Verfahren verarbeitet werden;

Fig. 3          ein Flussdiagramm, welches die wesentlichen Schritte einer Ausführungsform des erfindungsgemäßen Verfahrens wiedergibt;

Fig. 4          eine schematische Darstellung, welche die im erfindungsgemäßen Verfahren durchgeführte geometrische Rekonstruktion verdeutlicht;

Fig. 5 und Fig. 6   Diagramme, welche die Verbesserung eines SAR-Bilds darstellen, die mit einer Ausführungsform des erfindungsgemäßen Verfahrens erreicht wird.

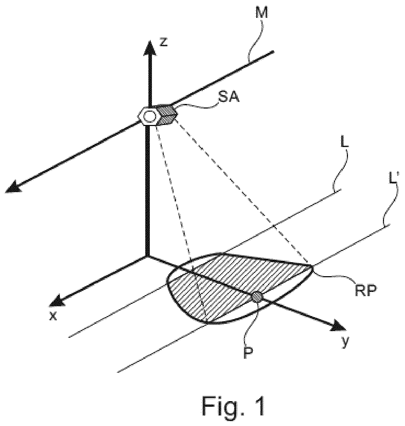

Zum besseren Verständnis wird zunächst anhand von Fig. 1 das Prinzip der SAR-Messung anhand der von einem Satelliten ausgesendeten Radarstrahlung verdeutlicht. Der in Fig. 1 dargestellte Satellit ist mit dem Bezugszeichen SA angedeutet und bewegt sich in Richtung des dargestellten Pfeils M, welcher der x-Richtung des in Fig. 1 wiedergegebenen kartesischen Koordinatensystems entspricht. Diese x-Richtung stellt die Azimut-Richtung dar. Der Satellit SA, dessen Höhe über der Erdoberfläche durch die z-Koordinate des Koordinatensystems repräsentiert wird, sendet während seiner Bewegung kontinuierlich Radarpulse über eine Sendeantenne in Richtung zur Erdoberfläche aus, wobei die Kontur eines gerade ausgesendeten Radarpulses auf der Erdoberfläche mit RP bezeichnet ist. Von jedem ausgesendeten Radarpuls wird das Radarecho erfasst, indem die an der Erdoberfläche reflektierte Radarstrahlung in der Range-Richtung y des kartesischen Koordinatensystems mit einem Empfänger (nicht aus Fig. 1 ersichtlich) zeitlich abgetastet wird. Bei dem Radarsystem SA der Fig. 1 handelt es sich um ein monostatisches Radarsystem, bei dem sich Sender und Empfänger auf der gleichen Plattform befinden.

Basierend auf der soeben beschriebenen Datenerfassung erhält man eine Datenakquisition mit einer Vielzahl von Tastwerten, wobei jeder Tastwert dem Radarecho eines bestimmten Radarpulses für eine Range-Position entspricht. Die Zuordnung eines Tastwerts zu einem Radarpuls wird dabei durch die Azimut-Position in x-Richtung repräsentiert. Eine Datenakquisition stellt somit eine zweidimensionale Matrix aus Tastwerten in Azimut-Richtung und Range-Richtung dar. Ein Tastwert ist dabei ein komplexer Wert mit einer entsprechenden Amplitude und Phase. In dem Ausführungsbeispiel der Fig. 1 werden nur Informationen der Radarstrahlung zwischen den beiden Linien L und L' erfasst, die einen Abstand von mehreren Kilometern (z.B. 30 km) aufweisen. Dies wird auch durch den schraffierten Bereich angedeutet, der sich von der Kontur RP der Ausleuchtungszone der Sendeantenne überschneidet.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten SA erfasst werden. Dies wird in Fig. 1 für den Punkt P verdeutlicht. Dieser Punkt P weist in dem dargestellten Szenario den geringstmöglichen Abstand zum Satelliten SA auf. Durch Bewegung des Satelliten in Richtung M wird dieser Abstand immer größer. Vor Erreichen der in Fig. 1 dargestellten Position wurde dieser Abstand immer kleiner. Aufgrund des Doppler-Effekts kommt es bei der Erfassung des Radarechos zu einer Phasenmodulation, die geeignet prozessiert werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus der oben beschriebenen Datenakquisition ist dem Fachmann hinlänglich bekannt und wird deshalb nicht weiter im Detail erläutert. Mit dem SAR-Messverfahren wird durch eine Vielzahl von Radarpulsen eines Radarsenders kleiner Apertur eine größere synthetische Apertur entsprechend der Ausdehnung des Radarpulses auf der Erdoberfläche simuliert.

In der nachfolgend beschriebenen Ausführungsform des erfindungsgemäßen Verfahrens werden zwei, durch entsprechende Satelliten erfasste Datenakquisitionen derart verarbeitet, dass fehlende Tastwerte einer Datenakquisition durch entsprechende Tastwerte der anderen Datenakquisition rekonstruiert werden. Es wird dabei ein monostatisches SAR-Radarsystem mit zwei Satelliten betrachtet, welche jeweils separat Radarpulse aussenden und deren Echos empfangen. Nichtsdestotrotz ist die Erfindung auch auf ein bistatisches SAR-Radarsystem anwendbar, bei dem die Radarpulse von einem Satelliten ausgesendet und durch einen anderen Satelliten empfangen werden.

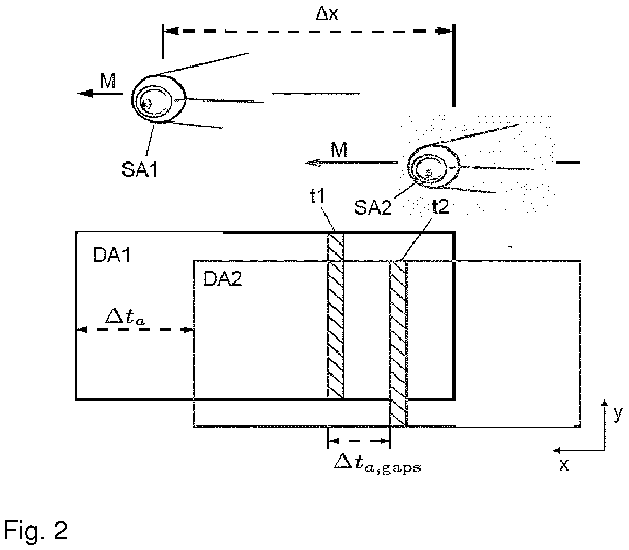

Fig. 2 zeigt beispielhaft ein monostatisches SAR-Radarsystem mit den beiden Satelliten SA1 und SA2, welche sich in die gleiche Azimut-Richtung M versetzt zueinander bewegen. Die Satelliten sind dabei sowohl in Azimut-Richtung als auch in Range-Richtung zueinander versetzt. Die Geschwindigkeit der beiden Satelliten ist gleich groß und beträgt $v_{sat}$. Die sich durch den Versatz der Satelliten ergebende Zeitdifferenz in Azimut-Richtung ist mit $\Delta t_a$ bezeichnet ($\Delta t_a = \Delta x/v_{sat}$).

Gemäß Fig. 2 wird durch den Satelliten SA1 eine erste Datenakquisition DA1 in der Form von Tastwerten entlang der Azimut-Richtung x und der Range-Richtung y erhalten. Analog hierzu wird durch den Satelliten SA2 eine zweite Datenakquisition DA2 mit entsprechenden Tastwerten in Azimut- und Range-Richtung erzeugt. In dem Szenario der Fig. 2 wird davon ausgegangen, dass die Datenerfassung für die Datenakquisition DA1 zu einem Zeitpunkt bzw. eine Zeitspanne tl und für die Datenakquisition DA2 für einen Zeitpunkt bzw. eine Zeitspanne t2 unterbrochen ist, wobei zu den jeweiligen Zeitpunkten bzw. Zeitspannen das gesamte Radarecho entlang der entsprechenden Azimut-Position ausgefallen ist. Die Zeitdifferenz zwischen den fehlenden Tastwerten ist dabei mit $\Delta t_{a,gaps}$ bezeichnet. In dem Beispiel der Fig. 2 ist die Zeit $\Delta t_a$ und die Zeit $\Delta t_{a,gaps}$ so gewählt, dass Tastwerte, welche in der Datenakquisition DA1 fehlen, andere Reflexionspositionen auf der Erdoberfläche wie die fehlenden Tastwerte der Datenakquisition DA2 betreffen. Demzufolge ist es mit dem erfindungsgemäßen Verfahren möglich, die fehlenden Tastwerte einer Datenakquisition durch die Tastwerte der anderen Datenakquisition zu ersetzen. In einem multistatischem SAR-Radarsystem aus zwei oder mehreren Plattformen kann hierdurch z.B. eine Verringerung der Pulswiederholrate der Radarpulse ermöglicht werden, wodurch die Performanz des Systems verbessert wird.

Aus der ersten Datenakquisition mit den ersetzten Tastwerten, gegebenenfalls in Kombination mit der zweiten Datenakquisition, werden dann zweidimensionale und/oder dreidimensionale digitale Bilder der Erdoberfläche berechnet. Die Berechnung solcher Bilder ist für SAR-Systeme an sich bekannt und wird deshalb nicht im Detail erläutert. Insbesondere werden im Rahmen der Weiterverarbeitung dreidimensionale Bilder durch (rechnergestützte) interferometrische Überlagerung von zwei zweidimensionalen Bildern bestimmt, wobei ein zweidimensionales Bild aus der ersten Datenakquisition mit entsprechend ersetzten Tastwerten erhalten wurde und das andere zweidimensionale Bild aus der zweiten Datenakquisition gewonnen wurde. Aus den beiden zweidimensionalen Bildern kann in an sich bekannter Weise eine Höheninformation abgeleitet werden, die dann in dem entsprechenden dreidimensionalen Bild enthalten ist.

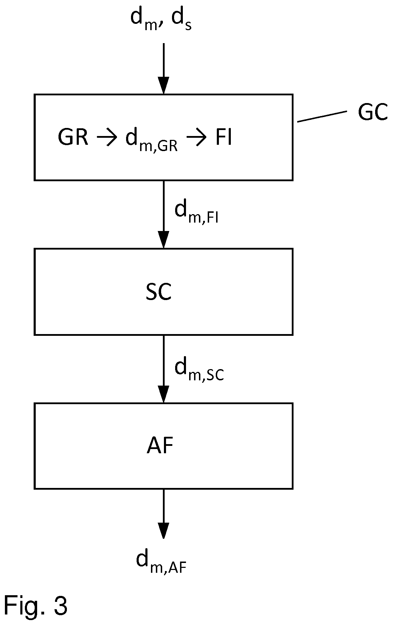

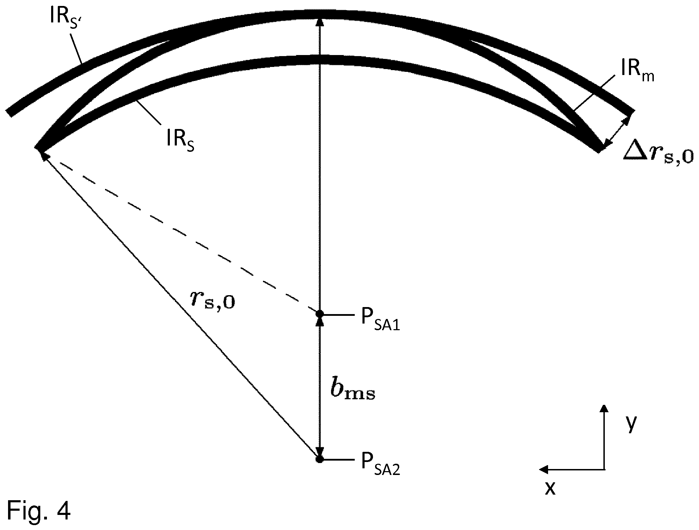

Anhand von Fig. 3 werden die wesentlichen Schritte einer Ausführungsform des erfindungsgemäßen Verfahrens für die Datenakquisitionen DA1 und DA2 der Fig. 2 erläutert. Gemäß Fig. 3 bezeichnen die Tastwerte $d_m$ die Tastwerte der ersten Datenakquisition DA1 und die Tastwerte $d_s$ die Tastwerte der zweiten Datenakquisition DA2. Zunächst wird in einem Schritt GC (GC = Geometry Compensation) eine geometrische Kompensation durchgeführt, welche sich aus einer geometrischen Rekonstruktion GR und einer Range-abhängigen Bandpass-Filterung FI zusammensetzt. Gemäß der geometrischen Rekonstruktion wird für einen entsprechenden fehlenden Tastwert der Datenakquisition DA1 ein rekonstruierter Tastwert aus Tastwerten der Datenakquisition DA2 mit solchen Positionen ermittelt, welche Reflexionspositionen auf der Erdoberfläche von Radarechos entsprechen, die zum fehlenden Tastwert beitragen. Entscheidend ist hierbei die Erkenntnis, dass die Beiträge zu einem Tastwert von einer Isorange-Linie auf der Erdoberfläche mit dem gleichen Abstand vom Radar stammen. Dies wird anhand von Fig. 4 verdeutlicht.

Fig. 4 zeigt eine Draufsicht auf die Erdoberfläche mit Azimut-Positionen in der x-Richtung und Range-Positionen in der y-Richtung. Die Position des Satelliten SA1 ist dabei mit $P_{SA1}$ angedeutet. Zu dem Tastwert gemäß der Range-Position $r_{m,0}$ aus der Datenaquisition DA1 tragen die Radarechos von allen Positionen entlang der Isorange-Linie $IR_m$ bei. Diese Linie stellt den Schnitt einer Kugel mit Mittelpunkt $P_{SA1}$ und einem der Position $r_{m,0}$ entsprechenden Radius mit der Erdoberfläche dar. Das dargestellte Segment der Isorange-Linie entspricht der Apertur des Radarempfängers. Die Position des Satelliten SA2 zu dem Zeitpunkt, wenn sich dieser Satellit an der gleichen Azimut-Position wie der Satellit SA1 befindet, ist mit $P_{SA2}$ bezeichnet. Der Abstand zwischen den beiden Satellitenpositionen in Range-Richtung ist mit $b_{ms}$ bezeichnet. Aufgrund des Versatzes der Satelliten in Range-Richtung befinden sich die Reflexionspositionen auf der Erdoberfläche in der Datenakquisition DA2, welche zu dem Tastwert der ersten Datenakquisition DA1 an der Range-Position $r_{m,0}$ beitragen, zwischen den beiden Isorange-Linien $IR_S$ und $IR_{S'}$, die um den Abstand $\Delta r_{s,0}$ voneinander beabstandet sind. Die Isorange-Linie $IR_S$ ist dabei der Schnitt einer Kugel mit Mittelpunkt $P_{SA2}$ und einem der Range-Position $r_{s,0}$ entsprechenden Radius mit der Erdoberfläche, wobei $r_{s,0}$ dem geringsten Abstand der Isorange-Linie $IR_m$ von dem Punkt $P_{SA2}$ entspricht. Demgegenüber ist die Isorange-Linie $IR_{S'}$ der Schnitt einer Kugel mit Mittelpunkt $P_{SA2}$ und einem der Range-Position $(r_{s,0}+\Delta r_{s,0})$ entsprechenden Radius mit der Erdoberfläche, wobei $(r_{s,0}+\Delta r_{s,0})$ dem größten Abstand der Isorange-Linie $IR_m$ von dem Punkt $P_{SA2}$ entspricht. Im Rahmen einer geometrischen Rekonstruktion des Tastwerts an der Position $r_{m,0}$ müssen die Tastwerte der zweiten Datenakquisition DA2 im Range-Intervall $\Delta r_{s,0}$ betrachtet werden. Es muss somit zur Rekonstruktion des Tastwerts an der Position $r_{m,0}$ die Energie, die auf das Intervall $[r_{s,0}, r_{s,0}+\Delta r_{s,0}]$ verteilt ist, refokussiert werden.

Bei der geometrischen Rekonstruktion GR gemäß Fig. 3 werden eine Interpolation, eine Demodulation (d.h. eine Phasenwiederherstellung) und eine Remodulation (d.h. eine Phasenrestauration) sowie ein Integrationsschritt durchgeführt. Ein rekonstruierter Tastwert $d_{m,GR}$ für einen fehlenden Tastwert $d_m$ mit vorgegebener Azimut-Position und der Range-Position $r_{m,0}$ in der ersten Datenakquisition wird dabei durch folgende Berechnung erhalten:

$$d_{m,GR}(r_{m,0}) = \int dr_s \cdot d_s(r_s) \cdot \exp\left[j \cdot \frac{4\pi}{\lambda} \cdot r_s\right] \cdot \exp\left[-j \cdot \frac{4\pi}{\lambda} \cdot r_{m,0}\right] \quad,$$

wobei $r_{m,0}$ die Range-Position des fehlenden Tastwerts und somit auch des rekonstruierten Tastwerts $d_{m,GR}$ ist; wobei $r_s$ die Range-Positionen gemäß der zweiten Datenakquisition DA2 darstellen und $d_s(T_s)$ interpolierte zweite Tastwerte der zweiten Datenakquisition für die vorgegebene Azimut-Position sind (d.h. der Azimut-Position der zweiten Datenakquisition, welche der vorgegebenen Azimut-Position entspricht), wobei über die Range-Positionen $r_s$ integriert wird, welche Reflexionspositionen auf der Erdoberfläche von Radarechos entsprechen, die zum fehlen-

den Tastwert $d_m$ beitragen, d.h. es wird im Beispiel der Fig. 4 über das Intervall $[r_{s,0}; r_{s,0}+\Delta r_{s,0}]$ integriert; wobei $\lambda$ die Wellenlänge der Radarstrahlung des SAR-Radarsystems ist.

In der hier beschriebenen Ausführungsform wird in einem nächsten Schritt eine Range-abhängige Filterung FI durchgeführt, um zusätzliches Rauschen außerhalb der gemeinsamen Range-Bandbreite zwischen den Tastwerten der ersten und zweiten Datenakquisition zu eliminieren. Hierbei wird berücksichtigt, dass durch die zueinander versetzten Range-Positionen der Satelliten SA1 und SA2 eine spektrale Frequenzverschiebung in entsprechenden Pixeln der SAR-Bilder auftritt, die durch die Gleichung (6) der Druckschrift [1] beschrieben wird. Über die Implementierung eines Bandpassfilters, der diese Frequenzverschiebung berücksichtigt und der in an sich bekannter Weise durch eine Impuls-Antwort-Funktion $h_{ss}$ repräsentiert werden kann, erhält man hieraus die gefilterte Datenabtastungen $d_{m,FI}$ wie folgt:

$$d_{m,FI}\left(r_{m,0}\right) = \left[d_{m,GR}\left(r_m\right) \star h_{ss}\left(r_m; r_{m,0}\right)\right]\left(r_{m,0}\right).$$

Dabei bezeichnet $r_{m,0}$ wiederum die Range-Position des fehlenden Tastwerts der ersten Datenakquisition und $h_{ss}$ ist die oben definierte Impuls-Antwort des Bandpassfilters, welche von der Position $r_{m,0}$ abhängt. Durch * wird die Faltung entlang der Range-Positionen $r_m$ der ersten Datenakquisition DA1 repräsentiert. Mit obiger Filterung wird die gemeinsame spektrale Bandbreite der beiden Datenakquisitionen DA1 und DA2 für den entsprechenden rekonstruierten Tastwert herausgefiltert.

Nach Erhalt des rekonstruierten und gefilterten Tastwerts $d_{m,FI}$ wird in der hier beschriebenen Ausführungsform in einem nächsten Schritt eine System-Kalibrierung SC durchgeführt, bei der die gegebenenfalls unterschiedlichen Akquisitionssysteme aneinander angepasst werden. Das heißt, unterschiedliche Charakteristika des Radars SA1 und des Radars SA2 werden in geeigneter Weise unter Verwendung von verfügbaren Kalibrierinformationen über die Systeme kompensiert. Solche Kalibrierinformationen sind an sich bekannt und können konstante und gegebenenfalls auch zeitvariable Faktoren umfassen, die den Status der Radarsysteme, deren Antennen sowie thermische und zeitliche Drifts, Bandbreiten usw. umfassen. Die Kompensation kann dabei durch folgende Gleichung repräsentiert werden:

$$d_{m,SC}\left(r_{m,0}\right) = \left[d_{m,FI}\left(r_m\right) \star c_{sys}\left(r_m; r_{m,0}\right)\right]\left(r_{m,0}\right).$$

$d_{m,SC}$ stellt den entsprechend kompensierten Tastwert dar, in dem die Kalibierinformation berücksichtigt ist. Dabei bezeichnet $r_{m,0}$ wiederum die Range-Position des fehlenden Tastwerts der ersten Datenakquisition und durch * wird die Faltung entlang der Range-Positionen $r_m$ der ersten Datenakquisition DA1 beschrieben. Die Funktion $c_{sys}$ ist eine komplexe Impuls-Antwort-Funktion für das Echo, welche das unterschiedliche Verhalten der beiden Akquisitionssysteme widerspiegelt. Die Definition einer entsprechenden Impuls-Antwort-Funktion kann durch den Fachmann in geeigneter Weise basierend auf bekannten unterschiedlichen Charakteristika der Radarsysteme definiert werden. In einer Variante unterscheiden sich die beiden Datenakquisitionen DA1 und DA2 nur in einem konstanten Amplituden- und Phasenversatz. In diesem Fall kann die Funktion $c_{sys}$ durch $k \cdot \delta(r_m - r_{m,0})$ dargestellt werden, wobei $\delta(\cdot)$ die Dirac-Funktion ist. Sollte der Amplituden- und Phasenversatz für unterschiedliche Azimut-Positionen variieren, jedoch für die Range-Positionen entlang einer Azimut-Position konstant sein, hängt der Wert des Faktors k von der Azimut-Position ab. Die Definition von anderen Impuls-Antwort-Funktionen $c_{sys}$ bei anderen Charakteristka von Radar-Systemen liegt im Rahmen von fachmännischem Handeln.

Nach der Durchführung der System-Kalibrierung SC wird schließlich auf die Tastwerte $d_{m,SC}$ ein sog. Autofokus AF angewendet. Dieser Autofokus berücksichtigt Restfehler, die auch nach der System-Kalibrierung vorhanden sein können. Die Restfehler können sowohl durch Fehler in der geometrischen Kompensation GC als auch in der System-Kalibrierung SC verursacht sein. Über eine entsprechende Autofokus-Funktion $c_{af}$ werden diese Restfehler dann durch folgende Gleichung kompensiert:

$$d_{m,AF}\left(r_{m,0}\right) = \left[d_{m,SC}\left(r_m\right) \star c_{af}\left(r_m; r_{m,0}\right)\right]\left(r_{m,0}\right).$$

Dabei bezeichnet $r_{m,0}$ wiederum die Range-Position des fehlenden Tastwerts der ersten Datenakquisition und durch * wird die Faltung entlang der Range-Positionen $r_m$ der ersten Datenakquisition DA1 beschrieben. Für den Autofokus-Schritt kann das in der Druckschrift [2] verwendete Verfahren eingesetzt werden. Die obige Korrektur kann somit mit einem an sich bekannten Verfahren durchgeführt werden. Für den Autofokus-Schritt AF können ggf. auch andere bekannte Techniken verwendet werden, wie z.B. Kontrast-Maximierung, Map-Drifts, Model-Matching und dergleichen.

Basierend auf der nach dem Autofokus AF erhaltenen Datenakquisition, in der fehlende Tastwerte durch die Tastwerte $d_{m,AF}$ ersetzt sind, kann dann ein SAR-Bild ermittelt werden. In gleicher Weise kann das Verfahren auch für fehlende Tastwerte der zweiten Datenakquisition DA2 eingesetzt werden, welche durch entsprechende Tastwerte der ersten Datenakquisition mit den Schritten aus Fig. 3 rekonstruiert werden.

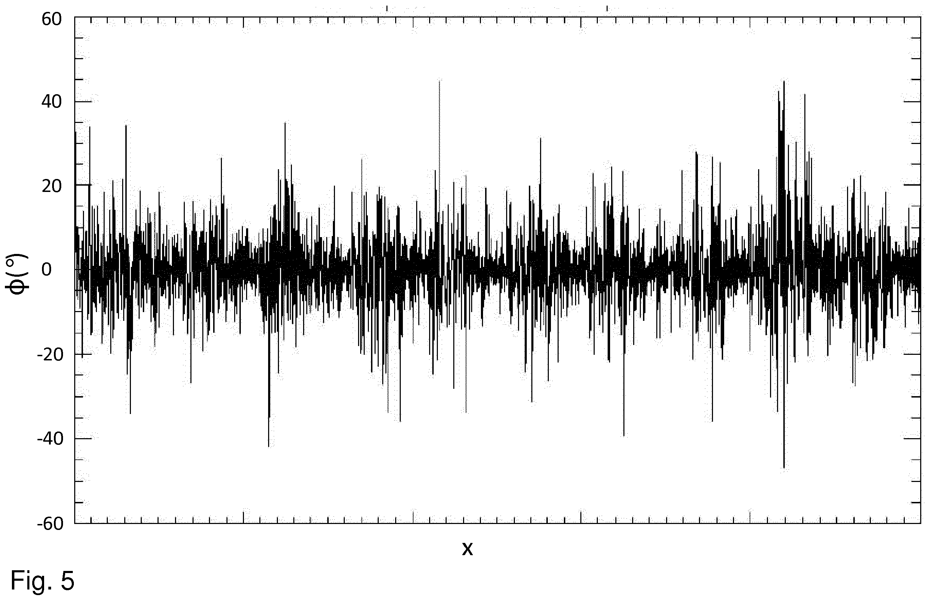

Das erfindungsgemäße Verfahren wurde anhand von realen SAR-Daten eines Gebiets auf der Erdoberfläche getestet. Dabei wurden zwei SAR-Bilder in der Form von Interferogrammen basierend auf jeweils zwei Datenakquisitionen eines bistatischen SAR-Systems bestimmt. Ein SAR-Bild beruhte auf Datenakquisitionen mit fehlenden Tastwerten, die nicht rekonstruiert wurden. Für das andere SAR-Bild erfolgte eine Rekonstruktion der Tastwerte. In Fig. 5 ist für ein differentielles Interferogramm, das aus Datenakquisitionen ohne rekonstruierte Tastwerte erhalten wurde, die über die Range-Richtung gemittelte differentielle Phase $\phi$ entlang des Azimuts x wiedergegeben. Im Idealfall sollte diese Phase bei 0° liegen. Dies ist jedoch in Fig. 5 nicht der Fall. Es treten vielmehr größere Fluktuationen in der Phase auf.

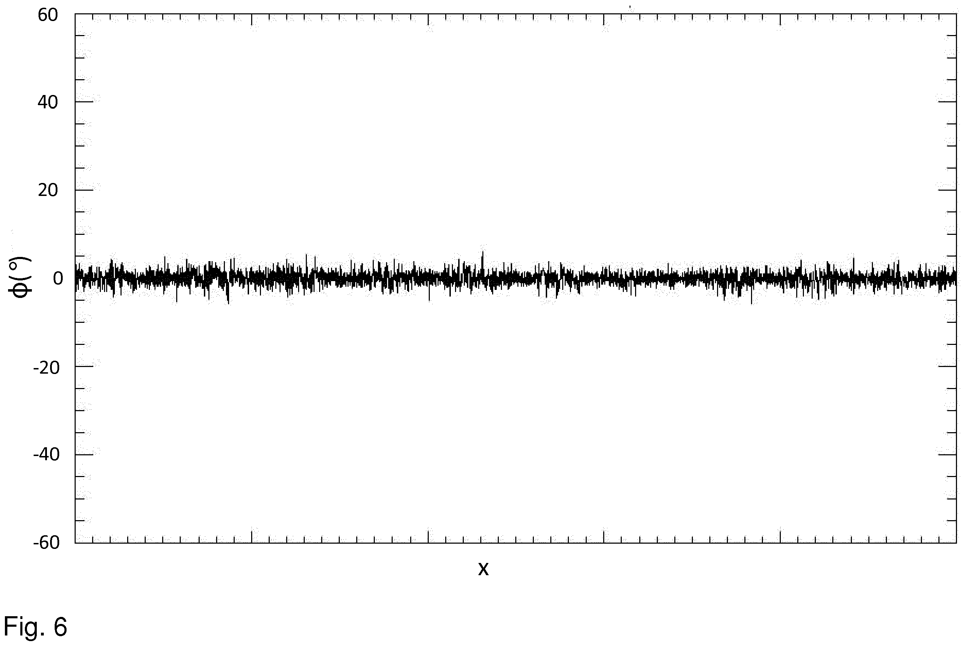

Fig. 6 zeigt das gleiche Diagramm wie Fig. 5, wobei das differentielle Interferogramm jedoch unter Verwendung der erfindungsgemäßen Rekonstruktion von Tastwerten bestimmt wurde. Wie man erkennt, sind dabei die Fluktuationen in der Phase wesentlich geringer und liegen sehr nahe bei dem idealen Phasenwert von 0°. Mit der erfindungsgemäßen Rekonstruktion können somit SAR-Bilder mit verbesserter Bildqualität erhalten werden.

Die im Vorangegangenen beschriebenen Ausführungsformen der Erfindung weisen eine Reihe von Vorteilen auf. Insbesondere können auf einfache Weise fehlende Tastwerte in einer SAR-Datenakquisition basierend auf Tastwerten einer anderen Datenakquisition rekonstruiert werden. Hierdurch können SAR-Bilder mit verbesserter Qualität erzeugt werden, wobei das Verfahren sowohl für homogene Flächen als auch für punktförmige Streuobjekte gute Ergebnisse liefert.

Literaturverzeichnis:

[1] F. Gatelli, A. Monti Guarnieri, F. Parizzi, P. Pasquali, C. Prati, F. Rocca, "The wavenumber shift in SAR interferometry" vol. 32, no. 4, Seiten 855-865, 1994.

[2] J. Salzman, D. Akamine, R. Lefevre, and J. C. Kirk, Jr., "Interrupted synthetic aperture radar (SAR)", IEEE Transactions on Aerospace and Electronic Systems, vol. 17, no. 5, Seiten 33-39, Mai 2002.

[3] G. Krieger et al.: "SAR signal reconstruction from non-uniform displaced phase centre sampling", Geoscience and Remote Sensing Symposium IGARSS '04, Bd. 3, Seiten 1763 bis 1766, 20. September 2004.

[4] Tao Lai et al.: "Achieving HRWS Images with Space-borne Bistatic SAR with Multiple Phase Centers", Geoscience and Remote Sensing Symposium IGARSS '08, 7. Juli 2008, Seiten V-180 bis V-183.

[5] Y. Liu et al.: "Signal model and imaging algorithm for spaceborne interrupted continuous-wave synthetic aperture radar", IET Radar, Sonar and Navigation, Bd. 6, Nr. 5, 1. Juni 2012, Seiten 348 bis 358.

[6] Yi Jiang et al.: "Study on time domain reconstruction from non-uniform azimuth sampling in SAR signal", 1st Asian and Pacific Conference on Synthetic Aperture Radar, 1. November 2007, Seiten 725 bis 728.

**Patentansprüche**

1. Verfahren zur rechnergestützten Verarbeitung von SAR-Daten, welche von einem SAR-Radarsystem (SA1, SA2) zur Fernerkundung der Erdoberfläche stammen, das zumindest einen Sender und zwei Empfänger umfasst, wobei sich das SAR-Radarsystem (SA1, SA2) in eine Azimut-Richtung (x) bewegt und dabei die Radarechos von durch den zumindest einen Sender ausgesendeten und an der Erdoberfläche reflektierten Radarpulsen (RP) durch die zwei Empfänger empfangen werden oder wurden, wodurch für den einen Empfänger eine erste Datenakquisition (DA1) erhalten wird, welche für eine Vielzahl von Azimut-Positionen in der Azimut-Richtung (x) jeweils erste Tastwerte ($d_m$) für mehrere Range-Positionen in einer zur Azimut-Richtung senkrechten Range-Richtung (y) umfasst, und für den anderen Empfänger eine zweite Datenakquisition (DA2) erhalten wird, welche für eine Vielzahl von Azimut-Positionen in der Azimut-Richtung (x) jeweils zweite Tastwerte ($d_s$) für mehrere Range-Positionen in einer zur Azimut-Richtung (x) senkrechten Range-Richtung (y) umfasst, wobei die erste und zweite Datenakquisition (DA1, DA2) zumindest teilweise das gleiche Gebiet der Erdoberfläche überdecken, wobei im Falle von einem oder mehreren fehlenden ersten Tastwerten ($d_m$) eine geometrische Rekonstruktion (GR) für einen jeweiligen fehlenden ersten Tastwert ($d_m$) durchgeführt wird, bei welcher der jeweilige fehlende erste

Tastwert (d$_m$) aus vorhandenen zweiten Tastwerten (d$_s$) mit Positionen in der zweiten Datenakquisition (DA2) rekonstruiert wird, welche Reflexionspositionen auf der Erdoberfläche von Radarechos entsprechen, die zum fehlenden ersten Tastwert (d$_m$) beitragen, wodurch ein dritter Tastwert (d$_{m,GR}$) erhalten wird, wobei der dritte Tastwert (d$_{m,GR}$) oder ein aus dem dritten Tastwert (d$_{m,GR}$) abgeleiteter Tastwert den fehlenden ersten Tastwert (d$_m$) ersetzt,
**dadurch gekennzeichnet, daß**
die geometrische Rekonstruktion den dritten Tastwert d$_{m,GR}$ für eine vorgegebene Azimut-position der ersten Datenakquisition wie folgt bestimmt:

$$d_{m,GR}(r_{m,0}) = \int dt_{a,s} \int dr_s \cdot d_s(r_s, t_{a,s}) \cdot \exp\left[j \cdot \frac{4\pi}{\lambda} \cdot r_s(t_{a,s})\right] \cdot$$
$$\exp\left[-j \cdot \frac{4\pi}{\lambda} \cdot r_{m,0}\right] \quad ,$$

wobei $r_{m,0}$ die Range-Position des dritten Tastwerts d$_{m,GR}$ ist;
wobei $r_s$ die Range-Positionen gemäß der zweiten Datenakquisition (DA2) darstellen und $d_s(r_s)$ interpolierte zweite Tastwerte der zweiten Datenakquisition (DA2) für die vorgegebene Azimut-Position sind;
wobei über die Range-Positionen $r_s$ integriert wird, welche Reflexionspositionen auf der Erdoberfläche von Radarechos entsprechen, die zum fehlenden ersten Tastwert (d$_m$) beitragen, und $t_{a,s}$ die Azimut-Positionen gemäß der zweiten Datenakquisiton sind, die durch diese Reflexionspositionen eingenommen werden;
wobei A die Wellenlänge der Radarstrahlung des SAR-Radarsystems ist.

2. Verfahren nach Anspruch 1, **dadurch gekennzeichnet, dass** ein vierter Tastwert (d$_{m,FI}$) aus dem dritten Tastwert (d$_{m,GR}$) durch eine Filterung (FI) ermittelt wird, welche derart ausgestaltet ist, dass die spektrale Bandbreite des sich aus dem vierten Tastwert (d$_{m,FI}$) ergebenden Bildpunkts eines SAR-Bilds an der Azimut- und Range-Position des dem dritten Tastwert (d$_{m,GR}$) entsprechenden fehlenden ersten Tastwerts (d$_m$) den überlappenden Bereich zwischen der spektralen Bandbreite für den Bildpunkt eines sich aus der ersten Datenakquisition (DA1) ergebenden SAR-Bilds an der Azimut- und Range-Position des fehlenden ersten Tastwerts (d$_m$) und der spektralen Bandbreite für den Bildpunkt eines sich aus der zweiten Datenakquisition (DA2) ergebenden SAR-Bilds an der Azimut- und Range-Position des fehlenden ersten Tastwerts (d$_m$) darstellt, wobei der vierte Tastwert (d$_{m,FI}$) oder ein aus dem vierten Tastwert (d$_{m,FI}$) abgeleiteter Tastwert den fehlenden ersten Tastwert (d$_m$) ersetzt.

3. Verfahren nach Anspruch 2, **dadurch gekennzeichnet, dass** für eine Azimut-Position eine Vielzahl von dritten Tastwerten (d$_{m,GR}$) für unterschiedliche Range-Positionen durch geometrische Rekonstruktion (GR) von ersten Tastwerten (d$_m$) erhalten wird, wobei die Filterung derart ausgestaltet ist, dass für einen jeweiligen dritten Tastwert (d$_{m,GR}$) der Azimut-Position eine Faltung der dritten Tastwerte (d$_{m,GR}$) entlang der Range-Positionen mit einem von der Range-Position des jeweiligen dritten Tastwerts (d$_{m,GR}$) abhängigen Bandpassfilter als Impuls-Antwort-Funktion durchgeführt wird, wobei der Bandpassfilter eine durch die unterschiedlichen Positionen der Empfänger des SAR-Radarsystems (SA1, SA2) verursachte Frequenzverschiebung in den dritten Tastwerten (d$_{m,GR}$) berücksichtigt.

4. Verfahren nach Anspruch 2 oder 3, **dadurch gekennzeichnet, dass** aus dem vierten Tastwert (d$_{m,FI}$) ein fünfter Tastwert (d$_{m,SC}$) ermittelt wird, indem die Charakteristika der ersten und zweiten Datenakquisition (DA1, DA2) aneinander angepasst werden, wobei der fünfte Tastwert (d$_{m,SC}$) oder ein aus dem fünften Tastwert (d$_{m,SC}$) abgeleiteter Tastwert den fehlenden ersten Tastwert (d$_m$) ersetzt.

5. Verfahren nach Anspruch 4, **dadurch gekennzeichnet, dass** der fünfte Tastwert (d$_{m,SC}$) über eine Faltung der vierten Tastwerte (d$_{m,FI}$) der Range-Positionen einer Azimut-Position mit einer von der Range-Position des fünften Tastwerts (d$_{m,SC}$) abhängigen Kalibrierungsfunktion als Impuls-Antwort-Funktion ermittelt wird.

6. Verfahren nach Anspruch 4 oder 5, **dadurch gekennzeichnet, dass** aus dem fünften Tastwert (d$_{m,SC}$) ein sechster Tastwert (d$_{m,AF}$) ermittelt wird, indem ein im fünften Tastwert (d$_{m,SC}$) erhaltener Restfehler korrigiert wird, wobei der sechste Tastwert (d$_{m,AF}$) über eine Faltung der fünften Tastwerte (d$_{m,SC}$) der Range-Positionen einer Azimut-Position mit einer von der Range-Position des sechsten Tastwerts (d$_{m,AF}$) abhängigen Korrekturfunktion als Impuls-Antwort-Funktion ermittelt wird.

7. Verfahren nach einem der vorhergehenden Ansprüche, **dadurch gekennzeichnet, dass** im Falle von einem oder mehreren fehlenden zweiten Tastwerten (d$_s$) der zweiten Datenakquisition (DA2) das Verfahren analog unter Vertauschung der Rollen der ersten und zweiten Datenakquisition (DA1, DA2) durchgeführt wird.

8. Verfahren nach einem der vorhergehenden Ansprüche, **dadurch gekennzeichnet, dass** das Verfahren für SAR-Daten eines SAR-Radarsystems (SA2, SA2) durchgeführt wird, das ein erstes monostatisches SAR-Radarsystem und ein zweites monostatisches SAR-Radarsystem umfasst, welche sich mit im Wesentlichen gleicher Geschwindigkeit in Azimut-Richtung versetzt zueinander bewegen, wobei mit einem Sender und einem Empfänger des ersten monostatischen SAR-Radarsystems die erste Datenakquisition (DA1) und mit einem Sender und einem Empfänger des zweiten monostatischen SAR-Radarsystems (SA2) die zweite Datenakquisition (DA2) durchgeführt wird.

9. Verfahren nach einem der vorhergehenden Ansprüche, **dadurch gekennzeichnet, dass** das Verfahren für SAR-Daten eines SAR-Radarsystems durchgeführt wird, das ein bistatisches SAR-Radarsystem mit einem ersten SAR-Radarsystem auf einer Plattform und einem zweiten SAR-Radarsystem auf einer anderen Plattform ist, welche sich mit im Wesentlichen gleicher Geschwindigkeit in Azimut-Richtung versetzt zueinander bewegen, wobei mit einem Sender und einem Empfänger des ersten SAR-Radarsystems die erste oder zweite Datenakquisition (DA1, DA2) durchgeführt wird und mit dem Sender des ersten SAR-Radarsystems und einem Empfänger des zweiten SAR-Radarsystems die entsprechende zweite oder erste Datenakquisition (DA, DA2) durchgeführt wird.

10. Vorrichtung zur rechnergestützten Verarbeitung von SAR-Daten, welche von einem SAR-Radarsystem (SA1, SA2) zur Fernerkundung der Erdoberfläche stammen, das zumindest einen Sender und zwei Empfänger umfasst, wobei sich das SAR-Radarsystem (SA1, SA2) in eine Azimut-Richtung (x) bewegt und dabei die Radarechos von durch den zumindest einen Sender ausgesendeten und an der Erdoberfläche reflektierten Radarpulsen (RP) durch die zwei Empfänger empfangen werden oder wurden, wodurch für den einen Empfänger eine erste Datenakquisition (DA1) erhalten wird, welche für eine Vielzahl von Azimut-Positionen in der Azimut-Richtung (x) jeweils erste Tastwerte ($d_m$) für mehrere Range-Positionen in einer zur Azimut-Richtung senkrechten Range-Richtung (y) umfasst, und für den anderen Empfänger eine zweite Datenakquisition (DA2) erhalten wird, welche für eine Vielzahl von Azimut-Positionen in der Azimut-Richtung (x) jeweils zweite Tastwerte ($d_s$) für mehrere Range-Positionen in einer zur Azimut-Richtung (x) senkrechten Range-Richtung (y) umfasst, wobei die erste und zweite Datenakquisition (DA1, DA2) zumindest teilweise das gleiche Gebiet der Erdoberfläche überdecken,
wobei die Vorrichtung eine Rechnereinrichtung umfasst, welche derart ausgestaltet ist, dass sie im Falle von einem oder mehreren fehlenden ersten Tastwerten ($d_m$) eine geometrische Rekonstruktion (GR) für einen jeweiligen fehlenden ersten Tastwert ($d_m$) durchführt, bei welcher der jeweilige fehlende erste Tastwert ($d_m$) aus vorhandenen zweiten Tastwerten ($d_s$) mit Positionen in der zweiten Datenakquisition (DA2) rekonstruiert wird, welche Reflexionspositionen auf der Erdoberfläche von Radarechos entsprechen, die zum fehlenden ersten Tastwert ($d_m$) beitragen, wodurch ein dritter Tastwert ($d_{m,GR}$) erhalten wird, wobei der dritte Tastwert ($d_{m,GR}$) oder ein aus dem dritten Tastwert ($d_{m,GR}$) abgeleiteter Tastwert den fehlenden ersten Tastwert ($d_m$) ersetzt,
**dadurch gekennzeichnet, daß**
die geometrische Rekonstruktion den dritten Tastwert $d_{m,GR}$ für eine vorgegebene Azimutposition der ersten Datenakquisition wie folgt bestimmt:

$$d_{m,GR}(r_{m,0}) = \int dt_{a,s} \int dr_s \cdot d_s(r_s, t_{a,s}) \cdot \exp\left[j \cdot \frac{4\pi}{\lambda} \cdot r_s(t_{a,s})\right] \cdot$$
$$\exp\left[-j \cdot \frac{4\pi}{\lambda} \cdot r_{m,0}\right] \quad,$$

wobei $r_{m,0}$ die Range-Position des dritten Tastwerts $d_{m,GR}$ ist;
wobei $r_s$ die Range-Positionen gemäß der zweiten Datenakquisition (DA2) darstellen und $d_s(r_s)$ interpolierte zweite Tastwerte der zweiten Datenakquisition (DA2) für die vorgegebene Azimut-Position sind;
wobei über die Range-Positionen $r_s$ integriert wird, welche Reflexionspositionen auf der Erdoberfläche von Radarechos entsprechen, die zum fehlenden ersten Tastwert ($d_m$) beitragen, und $t_{a,s}$ die Azimut-Positionen gemäß der zweiten Datenakquisiton sind, die durch diese Reflexionspositionen eingenommen werden;
wobei $\lambda$ die Wellenlänge der Radarstrahlung des SAR-Radarsystems ist.

11. Vorrichtung nach Anspruch 10 **dadurch gekennzeichnet, dass** mit der Vorrichtung ein Verfahren nach einem der Ansprüche 2 bis 9 durchführbar ist.

12. Computerprogrammprodukt mit einem auf einem maschinenlesbaren Träger gespeicherten Programmcode zur Durchführung eines Verfahrens nach einem der Ansprüche 1 bis 9, wenn der Programmcode auf einem Rechner ausgeführt wird.

13. Computerprogramm mit einem Programmcode zur Durchführung eines Verfahrens nach einem der Ansprüche 1 bis 9, wenn der Programmcode auf einem Computer ausgeführt wird.

**Claims**

1. A method for computer-aided processing of SAR data originating from an SAR radar system (SA1, SA2) for remote sensing of the Earth's surface, which comprises at least one emitter and two receivers, wherein the SAR radar system (SA1, SA2) moves in an azimuth direction (x), and, in doing so, the radar echoes of the radar pulses (RP) emitted by the at least one emitter and reflected off the Earth's surface are or were received by the two receivers, whereby, for the one receiver, a first data acquisition (DA1) is obtained, which comprises, for a plurality of azimuth positions in the azimuth direction (x), respectively first samples ($d_m$) for several range positions in a range direction (y) perpendicular to the azimuth direction, and, for the other receiver, a second data acquisition (DA2) is obtained, which comprises, for a plurality of azimuth positions in the azimuth direction (x), respectively second samples ($d_s$) for several range positions in a range direction (y) perpendicular to the azimuth direction (x), wherein the first and second data acquisitions (DA1, DA2) at least partially cover the same area of the Earth's surface, wherein, in case one or several first samples ($d_m$) are missing, a geometric reconstruction (GR) for a respective missing first sample ($d_m$) is carried out, during which the respective missing first sample ($d_m$) is reconstructed from existing second samples ($d_s$) with positions in the second data acquisition (DA2), which correspond to reflection positions on the Earth's surface of radar echoes, which contribute to the missing first sample ($d_m$), whereby a third sample ($d_{m,GR}$) is obtained, wherein the third sample ($d_{m,GR}$) or a sample derived from the third sample ($d_{m,GR}$) replaces the missing first sample ($d_m$),

   **characterized in that**

   the geometric reconstruction determines the third sample $d_{m,GR}$ for a given azimuth position of the first data acquisition as follows:

$$d_{m,GR}(r_{m,0}) = \int dt_{a,s} \int dr_s \cdot d_s(r_s, t_{a,s}) \cdot exp\left[j \cdot \frac{4\pi}{\lambda} \cdot r_s(t_{a,s})\right] \cdot exp\left[-j \cdot \frac{4\pi}{\lambda} \cdot r_{m,0}\right]$$

   wherein $r_{m,0}$ is the range position of the third sample $d_{m,GR}$;
   wherein $r_s$ represents the range positions according to the second data acquisition (DA2) and $d_s(r_s)$ are interpolated second samples of the second data acquisition (DA2) for the given azimuth position;
   wherein the integration is carried out over the range positions $r_s$, which correspond to reflection positions on the Earth's surface of radar echoes, which contribute to the missing first sample ($d_m$), and $t_{a,s}$ are the azimuth positions according to the second data acquisition, which are taken up by these reflection positions;
   wherein $\lambda$ is the wavelength of the radar waves of the SAR radar system.

2. The method according to claim 1, **characterized in that** a fourth sample ($d_{m,FI}$) is determined from the third sample ($d_{m,GR}$) by a filtering process (FI), which is designed in such a manner that the spectral bandwidth of the image point of an SAR image resulting from the fourth sample ($d_{m,FI}$) at the azimuth and range position of the missing first sample ($d_m$) corresponding to the third sample ($d_{m,GR}$) represents the overlapping area between the spectral bandwidth for the image point of an SAR image resulting from the first data acquisition (DA1) in an azimuth and range position of the missing first sample ($d_m$) and the spectral bandwidth for the image point of an SAR image resulting from the second data acquisition (DA2) in the azimuth and range position of the missing first sample ($d_m$), wherein the fourth sample ($d_{m,FI}$) or a sample derived from the fourth sample ($d_{m,FI}$) replaces the missing first sample ($d_m$).

3. The method according to claim 2, **characterized in that** for one azimuth position, a plurality of third samples ($d_{m,GR}$) for different range positions is obtained by geometric reconstruction (GR) of first samples ($d_{m,GR}$), wherein the filtering process is designed in such a manner that for a respective third sample ($d_{m,GR}$) of the azimuth position, a convolution of the third samples ($d_{m,GR}$) along the range positions is carried out with a bandpass filter that depends on the range position of the respective third sample ($d_{m,GR}$) as an impulse response function, wherein the bandpass filter takes into account a frequency shift in the third samples ($d_{m,GR}$) caused by the different positions of the receivers of the SAR radar system (SA1, SA2).

4. The method according to claim 2 or 3, **characterized in that** a fifth sample ($d_{m,SC}$) is determined from the fourth sample ($d_{m,FI}$) by adapting the characteristics of the first and second data acquisition (DA1, DA2) to each other, wherein the fifth sample ($d_{m,SC}$) or a sample derived from the fifth sample ($d_{m,SC}$) replaces the missing first sample

$(d_m)$.

5. The method according to claim 4, **characterized in that** the fifth sample $(d_{m,SC})$ is determined by a convolution of the fourth samples $(d_{m,Fl})$ of the range positions of an azimuth position with a calibration function that depends on the range position of the fifth sample $(d_{m,SC})$ as an impulse response function.

6. The method according to claim 4 or 5, **characterized in that** a sixth sample $(d_{m,AF})$ is determined from the fifth sample $(d_{m,SC})$ by correcting a residual error obtained in the fifth sample $(d_{m,SC})$, wherein the sixth sample $(d_{m,AF})$ is determined by a convolution of the fifth samples $(d_{m,SC})$ of the range positions of an azimuth position with a correction function that depends on the range position of the sixth sample $(d_{m,AF})$ as an impulse response function.

7. The method according to one of the preceding claims, **characterized in that** in case one or several second samples $(d_s)$ of the second data acquisition (DA2) are missing, the method is carried out analogously while reversing the roles of the first and second data acquisitions (DA1, DA2).

8. The method according to one of the preceding claims, **characterized in that** the method for SAR data of an SAR radar system (SA2, SA2) is carried out, which comprises a first monostatic SAR radar system and a second monostatic SAR radar system, which move substantially at the same speed in the azimuth direction while being offset relative to each other, wherein the first data acquisition (DA1) is carried out with an emitter and a receiver of the first monostatic SAR radar system and the second data acquisition (DA2) is carried out with an emitter and a receiver of the second monostatic SAR radar system (SA2).

9. The method according to one of the preceding claims, **characterized in that** the method for SAR data of an SAR radar system is carried out, which is a bistatic SAR radar system with a first SAR radar system on a platform and a second SAR radar system on another platform, which move substantially at the same speed in the azimuth direction while being offset relative to each other, wherein the first or second data acquisition (DA1, DA2) are carried out with an emitter and a receiver of the first SAR radar system and the second or first data acquisition (DA, DA2) is correspondingly carried out with the emitter of the first SAR radar system and a receiver of the second SAR radar system.

10. An apparatus for computer-aided processing of SAR data originating from an SAR radar system (SA1, SA2) for remote sensing of the Earth's surface, which comprises at least one emitter and two receivers, wherein the SAR radar system (SA1, SA2) moves in an azimuth direction (x), and, in doing so, the radar echoes of the radar pulses (RP) emitted by the at least one emitter and reflected off the Earth's surface are or were received by the two receivers, whereby, for the one receiver, a first data acquisition (DA1) is obtained, which comprises, for a plurality of azimuth positions in the azimuth direction (x), respectively first samples $(d_m)$ for several range positions in a range direction (y) perpendicular to the azimuth direction, and, for the other receiver, a second data acquisition (DA2) is obtained, which comprises, for a plurality of azimuth positions in the azimuth direction (x), respectively second samples $(d_s)$ for several range positions in a range direction (y) perpendicular to the azimuth direction (x), wherein the first and second data acquisitions (DA1, DA2) at least partially cover the same area of the Earth's surface, wherein the apparatus comprises a computer means, which is designed in such a manner that, in case one or several first samples $(d_m)$ are missing, a geometric reconstruction (GR) for a respective missing first sample $(d_m)$ is carried out, during which the respective missing first sample $(d_m)$ is reconstructed from existing second samples $(d_s)$ with positions in the second data acquisition (DA2), which correspond to reflection positions on the Earth's surface of radar echoes, which contribute to the missing first sample $(d_m)$, whereby a third sample $(d_{m,GR})$ is obtained, wherein the third sample $(d_{m,GR})$ or a sample derived from the third sample $d_{m,GR}$ replaces the missing first sample $(d_m)$, **characterized in that** the geometric reconstruction determines the third sample $d_{m,GR}$ for a given azimuth position of the first data acquisition as follows:

$$d_{m,GR}(r_{m,0}) = \int dt_{a,s} \int dr_s \cdot d_s(r_s, t_{a,s}) \cdot exp\left[ j \cdot \frac{4\pi}{\lambda} \cdot r_s(t_{a,s}) \right] \cdot exp\left[ -j \cdot \frac{4\pi}{\lambda} \cdot r_{m,0} \right]$$

wherein $r_{m,0}$ is the range position of the third sample $d_{m,GR}$;
wherein $r_s$ represents the range positions according to the second data acquisition (DA2) and $d_s(r_s)$ are interpolated second samples of the second data acquisition (DA2) for the given azimuth position;
wherein the integration is carried out over the range positions $r_s$, which correspond to reflection positions on the Earth's surface of radar echoes, which contribute to the missing first sample ($d_m$), and $t_{a,s}$ are the azimuth positions according to the second data acquisition, which are taken up by these reflection positions; wherein $\lambda$ is the wavelength of the radar waves of the SAR radar system.

11. The apparatus according to claim 10, **characterized in that** a method according to one of the claims 2 to 9 can be carried out using the device.

12. A computer program product with a program code stored on a machine-readable medium for carrying out a method according to one of the claims 1 to 9 when the program code is executed on a computer.

13. A computer program with a program code for carrying out a method according to one of the claims 1 to 9 when the program code is executed on a computer.

**Revendications**

1. Procédé de traitement assisté par ordinateur de données SAR qui proviennent d'un système radar SAR (SA1, SA2) pour la télédétection de la surface terrestre qui comprend au moins un émetteur et deux récepteurs, où le système radar SAR (SA1, SA2) se déplace dans une direction azimutale (x) et, ce faisant, les échos radar d'impulsions radar émises par l'au moins un émetteur et réfléchies par la surface terrestre sont ou ont été reçus par les deux récepteurs, moyennant quoi est obtenue, pour l'un des récepteurs, une première acquisition de données (DA1) qui comprend, pour une pluralité de positions azimutales dans la direction de l'azimut (x), respectivement des premiers échantillons ($d_m$) pour plusieurs positions en portée dans une direction de portée (y) perpendiculaire à la direction azimutale (x), et est obtenue, pour l'autre récepteur, une seconde acquisition de données (DA2), qui comprend, pour une pluralité de positions azimutales dans la direction de l'azimut (x), respectivement des seconds échantillons ($d_m$) pour plusieurs positions en portée dans une direction de portée (y) perpendiculaire à la direction azimutale (x), où la première et la seconde acquisition de données (DA1, DA2) couvrent au moins partiellement la même région de la surface terrestre,

où en cas d'un ou plusieurs premiers échantillons ($d_m$) manquants, une reconstruction géométrique (GR) est réalisée pour un premier échantillon ($d_m$) manquant respectif, lors de laquelle le premier échantillon ($d_m$) manquant respectif est reconstruit à partir de seconds échantillons ($d_s$) disponibles avec des positions dans la seconde acquisition de données (DA2) qui correspondent à des positions de réflexion d'échos radars sur la surface terrestre, qui contribuent au premier échantillon ($d_m$) manquant, moyennant quoi un troisième échantillon ($d_{m,GR}$) est obtenu, où le troisième échantillon ($d_{m,GR}$) ou un échantillon dérivé du troisième échantillon ($d_{m,GR}$) remplace le premier échantillon ($d_m$) manquant,

**caractérisé en ce que**

la reconstruction géométrique détermine le troisième échantillon $d_{m,GR}$ pour une position azimutale donnée de la première acquisition de données de la manière suivante :

$$d_{m,GR}\left(r_{m,0}\right) = \int dt_{a,s} \int dr_s \cdot d_s\left(r_s, t_{a,s}\right) \cdot exp\left[j \cdot \frac{4\pi}{\lambda} \cdot r_s\left(t_{a,s}\right)\right] \cdot exp\left[-j \cdot \frac{4\pi}{\lambda} \cdot r_{m,0}\right]$$

où $r_{m,0}$ est la position en portée du troisième échantillon $d_{m,GR}$ ;

où $r_s$ représente les positions en portée selon la seconde acquisition de données (DA2) et $d_s(r_s)$ sont des seconds échantillons interpolés de la seconde acquisition de données (DA2) pour la position azimutale donnée ;

où une intégration est réalisée sur les positions en portée $r_s$ qui correspondent à des positions de réflexion d'échos radar sur la surface terrestre qui contribuent au premier échantillon ($d_m$) manquant, et $t_{a,s}$ sont les positions azimutales selon la seconde acquisition de données qui sont occupées par ces positions de réflexion ;

où $\lambda$ est la longueur d'onde du rayonnement radar du système radar SAR.

2. Procédé selon la revendication 1, **caractérisé en ce que** un quatrième échantillon ($d_{m,FI}$) est déterminé à partir du troisième échantillon ($d_{m,GR}$) par un filtrage (FI) qui est conçu de telle manière que la largeur de bande spectrale du point d'une image SAR résultant du quatrième échantillon ($d_{m,FI}$) à la position azimutale et en portée du premier échantillon manquant ($d_m$) correspondant au troisième échantillon ($d_{m,GR}$) représente la zone de superposition entre la largeur de bande spectrale pour le point d'une image SAR résultant de la première acquisition de données (DA1) à la position azimutale et en portée du premier échantillon ($d_m$) manquant et la largeur de bande spectrale pour le point d'une image SAR résultant de la seconde acquisition de données (DA2) à la position azimutale et en portée

du premier échantillon ($d_m$) manquant, où le quatrième échantillon ($d_{m,FI}$) ou un échantillon dérivé du quatrième échantillon ($d_{m,FI}$) remplace le premier échantillon ($d_m$) manquant.

3. Procédé selon la revendication 2, **caractérisé en ce que**, pour une position azimutale, une pluralité de troisièmes échantillons ($d_{m,GR}$) pour différentes positions en portée est obtenue par reconstruction géométrique (GR) de premiers échantillons ($d_m$), où le filtrage est conçu de telle manière que, pour un troisième échantillon ($d_{m,GR}$) respectif de la position azimutale, un produit de convolution des troisièmes échantillons ($d_{m,GR}$) le long des positions en portée est réalisé avec un filtre passe-bande dépendant de la position en portée du troisième échantillon ($d_{m,GR}$) respectif en tant que fonction de réponse impulsionnelle, où le filtre passe-bande prend en compte un décalage de fréquence dans les troisièmes échantillons ($d_{m,GR}$) causé par les positions différentes des récepteurs du système radar SAR (SA1, SA2).

4. Procédé selon la revendication 2 ou 3, **caractérisé en ce que** un cinquième échantillon ($d_{m,SC}$) est déterminé à partir du quatrième échantillon ($d_{m,FI}$) en adaptant les caractéristiques des première et seconde acquisitions de données (DA1, DA2) les unes aux autres, où le cinquième échantillon ($d_{m,SC}$) ou un échantillon dérivé du cinquième échantillon ($d_{m,SC}$) remplace le premier échantillon ($d_m$) manquant.

5. Procédé selon la revendication 4, **caractérisé en ce que** le cinquième échantillon ($d_{m,SC}$) est déterminé par un produit de convolution des quatrième échantillons ($d_{m,FI}$) des positions en portée d'une position azimutale avec une fonction d'étalonnage dépendante de la position en portée du cinquième échantillon ($d_{m,SC}$) en tant que fonction de réponse impulsionnelle.

6. Procédé selon la revendication 4 ou 5, **caractérisé en ce que** un sixième échantillon ($d_{m,AF}$) est déterminé à partir du cinquième échantillon ($d_{m,SC}$) en corrigeant une erreur résiduelle obtenue dans le cinquième échantillon ($d_{m,SC}$), où le sixième échantillon ($d_{m,AF}$) est déterminé par un produit de convolution des cinquièmes échantillons ($d_{m,SC}$) des positions en portée de la position azimutale avec une fonction de correction dépendante de la position en portée du sixième échantillon ($d_{m,AF}$) en tant que fonction de réponse impulsionnelle.

7. Procédé selon l'une des revendications précédentes, **caractérisé en ce qu'**en cas d'un ou plusieurs seconds échantillons ($d_s$) manquants de la seconde acquisition de données (DA2), le procédé est mis en oeuvre de manière analogue en échangeant les rôles de la première et de la seconde acquisition de données (DA1, DA2).

8. Procédé selon l'une des revendications précédentes, **caractérisé en ce que** le procédé pour des données SAR est mis en oeuvre au moyen d'un système radar (SA2, SA2) comportant un premier système radar SAR mono-statique et un second système radar SAR mono-statique qui se déplacent substantiellement à la même vitesse dans la direction azimutale avec un décalage mutuel, où la première acquisition de données (DA1) est réalisée avec un émetteur et un récepteur du premier système radar SAR mono-statique et la seconde acquisition de données (DA2) est réalisée avec un émetteur et un récepteur du second système radar SAR mono-statique (SA2).

9. Procédé selon l'une des revendications précédentes, **caractérisé en ce que** le procédé pour des données SAR est mis en oeuvre au moyen d'un système radar SAR qui est un système radar SAR bi-statique avec un premier système radar SAR sur une plateforme et un second système radar SAR sur une autre plateforme qui se déplacent substantiellement à la même vitesse dans la direction azimutale avec un décalage mutuel, où la première ou la seconde acquisition de données (DA1, DA2) est réalisée avec un émetteur et un récepteur du premier système radar SAR et la seconde ou première acquisition de données (DA, DA2) respective est réalisée avec l'émetteur du premier système radar SAR et un récepteur du second système radar SAR.

10. Dispositif pour le traitement assisté par ordinateur de données SAR qui proviennent d'un système radar SAR (SA1, SA2) pour la télédétection de la surface terrestre qui comprend au moins un émetteur et deux récepteurs, où le système radar SAR (SA1, SA2) se déplace dans une direction azimutale (x) et, ce faisant, les échos radar d'impulsions radar émises par l'au moins un émetteur et réfléchies par la surface terrestre sont ou ont été reçus par les deux récepteurs, moyennant quoi est obtenue, pour l'un des récepteurs, une première acquisition de données (DA1) qui comprend, pour une pluralité de positions azimutales dans la direction de l'azimut (x), respectivement des premiers échantillons ($d_m$) pour plusieurs positions en portée dans une direction de portée (y) perpendiculaire à la direction azimutale (x), et est obtenue, pour l'autre récepteur, une seconde acquisition de données (DA2), qui comprend, pour une pluralité de positions azimutales dans la direction de l'azimut (x), respectivement des seconds échantillons ($d_m$) pour plusieurs positions en portée dans une direction de portée (y) perpendiculaire à la direction azimutale (x), où la première et la seconde acquisition de données (DA1, DA2) couvrent au moins partiellement la même région

EP 2 829 892 B1

de la surface terrestre,
où le dispositif comprend un dispositif de calcul qui est conçu de telle manière que, en cas d'un ou plusieurs premiers échantillons ($d_m$) manquants, une reconstruction géométrique (GR) est réalisée pour un premier échantillon ($d_m$) manquant respectif, lors de laquelle le premier échantillon ($d_m$) manquant respectif est reconstruit à partir de seconds échantillons ($d_s$) disponibles avec des positions dans la seconde acquisition de données (DA2) qui correspondent à des positions de réflexion d'échos radars sur la surface terrestre, qui contribuent au premier échantillon ($d_m$) manquant, moyennant quoi un troisième échantillon ($d_{m,GR}$) est obtenu, où le troisième échantillon ($d_{m,GR}$) ou un échantillon dérivé du troisième échantillon ($d_{m,GR}$) remplace le premier échantillon ($d_m$) manquant,
**caractérisé en ce que**
la reconstruction géométrique détermine le troisième échantillon $d_{m,GR}$ pour une position azimutale donnée de la première acquisition de données de la manière suivante :

$$d_{m,GR}(r_{m,0}) = \int dt_{a,s} \int dr_s \cdot d_s(r_s, t_{a,s}) \cdot exp\left[j \cdot \frac{4\pi}{\lambda} \cdot r_s(t_{a,s})\right] \cdot exp\left[-j \cdot \frac{4\pi}{\lambda} \cdot r_{m,0}\right]$$

où $r_{m,0}$ est la position en portée du troisième échantillon $d_{m,GR}$ ;
où $r_s$ représente les positions en portée selon la seconde acquisition de données (DA2) et $d_s(r_s)$ sont des seconds échantillons interpolés de la seconde acquisition de données (DA2) pour la position azimutale donnée ;
où une intégration est réalisée sur les positions en portée $r_s$ qui correspondent à des positions de réflexion d'échos radar sur la surface terrestre qui contribuent au premier échantillon ($d_m$) manquant, et $t_{a,s}$ sont les positions azimutales selon la seconde acquisition de données qui sont occupées par ces positions de réflexion ;
où $\lambda$ est la longueur d'onde du rayonnement radar du système radar SAR.

11. Dispositif selon la revendication 10, **caractérisé en ce qu'**un procédé selon l'une des revendications 2 à 9 peut être mis en oeuvre avec le dispositif.

12. Produit de programme informatique avec un code de programme stocké sur un support lisible en machine pour la mise en oeuvre d'un procédé selon l'une des revendications 1 à 9, lorsque le code de programme est exécuté dans un ordinateur.

13. Programme informatique avec un code de programme pour la mise en oeuvre d'un procédé selon l'une des revendications 1 à 9 lorsque le code de programme est exécuté dans un ordinateur.

Fig. 1

Fig. 2

EP 2 829 892 B1

$d_m, d_s$

$$GR \rightarrow d_{m,GR} \rightarrow FI$$

GC

$d_{m,FI}$

SC

$d_{m,SC}$

AF

$d_{m,AF}$

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **F. GATELLI ; A. MONTI GUARNIERI ; F. PARIZZI ; P. PASQUALI ; C. PRATI ; F. ROCCA.** *The wavenumber shift in SAR interferometry,* 1994, vol. 32 (4), 855-865
- **J. SALZMAN ; D. AKAMINE ; R. LEFEVRE ; J. C. KIRK, JR.** Interrupted synthetic aperture radar (SAR). *IEEE Transactions on Aerospace and Electronic Systems,* Mai 2002, vol. 17 (5), 33-39
- **G. KRIEGER et al.** SAR signal reconstruction from non-uniform displaced phase centre sampling. *Geoscience and Remote Sensing Symposium IGARSS '04,* 20. September 2004, vol. 3, 1763-1766
- **TAO LAI et al.** Achieving HRWS Images with Space-borne Bistatic SAR with Multiple Phase Centers. *Geoscience and Remote Sensing Symposium IGARSS '08,* 07. Juli 2008, V-180-V-183
- **Y. LIU et al.** Signal model and imaging algorithm for spaceborne interrupted continuous-wave synthetic aperture radar. *IET Radar, Sonar and Navigation,* 01. Juni 2012, vol. 6, 348-358
- **YI JIANG et al.** Study on time domain reconstruction from non-uniform azimuth sampling in SAR signal. *1st Asian and Pacific Conference on Synthetic Aperture Radar,* 01. November 2007, 725-728